**Europäisches Patentamt**

**European Patent Office**

**Office européen des brevets**

(19)

(11) Veröffentlichungsnummer: **0 135 738**
**B1**

(12) # EUROPÄISCHE PATENTSCHRIFT

(45) Veröffentlichungstag der Patentschrift:
14.12.88

(51) Int. Cl.⁴: **G 11 B 5/127**

(21) Anmeldenummer: **84109247.1**

(22) Anmeldetag: **03.08.84**

(54) Schreib-/Lese-Magnetkopf für ein senkrecht zu magnetisierendes Aufzeichnungsmedium.

(30) Priorität: **19.08.83 DE 3330075**

(43) Veröffentlichungstag der Anmeldung:
**03.04.85 Patentblatt 85/14**

(45) Bekanntmachung des Hinweises auf die Patenterteilung:
**14.12.88 Patentblatt 88/50**

(84) Benannte Vertragsstaaten:
**AT CH DE FR GB IT LI NL SE**

(56) Entgegenhaltungen:
**EP-A-0 033 236**
**EP-A-0 099 124**
**DE-A-2 924 013**
**US-A-4 385 334**

**IBM TECHNICAL DISCLOSURE BULLETIN, Band 20, Nr. 8, Januar 1978, New York, USA; A.S. HOAGLAND : "Combined longitudinal and vertical magnetic recording head", Seiten 3311-3312**

(73) Patentinhaber: **Siemens Aktiengesellschaft Berlin und München, Wittelsbacherplatz 2, D-8000 München 2 (DE)**

(72) Erfinder: **Schewe, Herbert, Dr., Haydnstrasse 58, D-8522 Herzogenaurach (DE)**
Erfinder: **Diepers, Heinrich, Dr., Veit- Stoss- Strasse 44, D-8552 Höchstadt (DE)**

## Beschreibung

Die Erfindung bezieht sich auf einen Schreib-/Lese-Magnetkopf für ein Aufzeichnungsmedium, das mit mindestens einer magnetisierbaren Speicherschicht versehen ist, welche ein magnetisch anisotropes Material enthält, dessen Achse leichter Magnetisierung im wesentlichen senkrecht zur Oberfläche des Mediums ausgerichtet ist und in das längs einer Spur Informationen durch senkrechte Magnetisierung der Speicherschicht einzuschreiben sind. Der Magnetkopf weist einen den magnetischen Fluß führenden Leitkörper mit zwei Polschenkeln auf, die in Bewegungsrichtung des Kopfes hintereinander angeordnet sind und deren dem Aufzeichnungsmedium zugewandten, zumindest weitgehend senkrecht bezüglich der Oberfläche des Aufzeichnungsmediums ausgerichteten Endstücke untereinander einen vorbestimmten Abstand haben, und enthält ferner mindestens eine Spulenwicklung, wobei für die Lesefunktion die Flußführungsrichtungen in den beiden Polschenkelendstücken antiparallel verlaufen. Ein solcher Magnetkopf geht aus der DE-A-2 924 013 hervor.

Das Prinzip der senkrechten Magnetisierung zur Speicherung von Informationen ist allgemein bekannt (vgl. z. B. "IEEE Transactions on Magnetics", vol. MAG-16, No. 1, Jan. 1980, Seiten 71 bis 76 oder die genannte DE-A-2 924 013). Für dieses Prinzip, das vielfach auch als vertikale Magnetisierung bezeichnet wird, sind besondere Aufzeichnungsmedien, beispielsweise in Form einer starren Magnetspeicherplatte, einer flexiblen Einzelplatte (Floppy Disc) oder eines Magnetbandes erforderlich. Ein entsprechendes Aufzeichnungsmedium weist mindestens eine magnetisierbare Speicherschicht vorbestimmter Dicke auf, welche ein magnetisch anisotropes Material, insbesondere aus einer CoCr-Legierung, enthält, dessen Achse leichter Magnetisierung senkrecht zur Oberfläche des Mediums gerichtet ist. Mittels eines besonderen Schreibkopfes werden dann längs einer Spur die einzelnen Informationen in aufeinanderfolgenden Abschnitten, auch Zellen oder Blöcke genannt, durch Magnetisierung der Speicherschicht eingeschrieben. In der Praxis werden im allgemeinen die magnetischen Flußwechsel, d. h. die Übergänge von einer Magnetisierungsrichtung zur entgegengesetzten, als Informationen benutzt. Die Abschnitte haben dabei eine vorbestimmte, auch als Wellenlänge bezeichnete Ausdehnung in Längsrichtung der Spur. Diese Ausdehnung kann im Vergleich zu der bei dem Verfahren der longitudinalen Speicherung durch die Entmagnetisierung gegebenen Grenze wesentlich kleiner sein, so daß sich nach dem Prinzip der senkrechten Magnetisierung die Informationsdichte in dem Aufzeichnungsmedium vorteilhaft vergrößern läßt.

Bei diesem Prinzip der senkrechten Magnetisierung ergeben sich jedoch Probleme bei der Entwicklung entsprechender kombinierter Schreib/Lese-Köpfe Bei diesen Köpfen macht nämlich vor allem die angestrebte Flußführung zu einem möglichst geschlossenen Kreis mit geringem magnetischen Widerstand Schwierigkeiten.

Ein geeigneter kombinierter Schreib-/Lese-Kopf- d. h. ein Magnetkopf, mit dem sowohl die Schreib- als auch die Lesefunktion auszuüben ist, weist im allgemeinen einen sogenannten Hauptpol auf, mit dem ein hinreichend starkes senkrechtes Magnetfeld zum Ummagnetisieren der einzelnen Abschnitte in der Speicherschicht erzeugt wird. Der notwendige Rückschluß kann dann z. B. durch einen sogenannten Hilfspol auf der gegenüberliegenden Seite des Aufzeichnungsmediums erfolgen (vgl. die genannte Literaturstelle "IEEE Trans. Magn.", vol. MAG-16). Daneben ist auch der Rückschluß durch den Streufluß bekannt ("IEEE Trans. Magn.", vol. MAG-18, no. 6, Nov. 1982, Seiten 1170 bis 1172).

Ferner läßt sich ein Rückschluß auch mit einem besonderen Hilfspol vornehmen, der sich auf derselben Seite wie der Hauptpol befindet (vgl. "IEEE Trans. Magn.", vol. MAG-17, no. 6, Nov. 1981, Seiten 3120 bis 3122 oder vol. MAG-18, no. 6, Nov. 1982, Seiten 1158 bis 1163 oder die eingangs genannte DE-A-2 924 013). Dementsprechend enthält der aus der DE-A-2 924 013 bekannte Schreib- und Lese-Magnetkopf in Bewegungsrichtung des unter ihm hinwegbewegten Aufzeichnungsmediums gesehen auf seiner vorderen Stirnseite einen Hilfspol und auf seiner rückwärtigen Seite den eigentlichen Hauptpol. Dieser Hauptpol wird von einem Polschenkel gebildet, der im wesentlichen aus einem dünnen, senkrecht zur Bewegungsrichtung verlaufenden Polstück besteht, das auf einem nicht-magnetischen Substrat aufgebracht ist. Den in Bewegungsrichtung gesehen ausgedehnteren Hilfspol, der vor dem Hauptpol liegt, bildet ein Polschenkel, der sich aus mehreren senkrecht zur Bewegungsrichtung angeordneten dünnen Polstücken mit dazwischenliegenden Isolationsschichten zusammensetzt und der von dem Hauptpol über einen Luftspalt getrennt ist. Die Ausdehnung dieses Luftspaltes ist dabei verhältnismäßig groß und liegt beispielsweise in der Größenordnung von 5 bis 10 µm. In dem Luftspalt liegt eine elektrische Wicklung, mit der für die Schreibfunktion der Hauptpol erregt bzw. für die Lesefunktion die Erregung des Hauptpoles registriert werden kann. Der Hilfspol dient dabei in jedem Falle lediglich nur zur Flußrückführung. Ein eventuelles Mitschreiben des Hilfspols kann in Kauf genommen werden, da ihm der schreibende Hauptpol stets nacheilt und somit vom Hilfspol eventuell geschriebene Informationen überschreibt, sofern die Breite des Hilfspols nicht größer als die des Hauptpols ist und somit bereits beschriebene Nachbarspuren unbeeinflußt bleiben. Darüber hinaus sind auch der größere Querschnitt des Hilfspols im Vergleich zum Hauptpol und die verhältnismäßig große Ausdehnung des Luftspaltes erforderlich, um eine weitgehende Reduzierung der magnetischen Flußdichte am Hilfspol zu gewährleisten. Jedoch kann ein Mitlesen des Hilfspols zu Schwierigkeiten bei der Informationserkennung führen.

Der von der elektrischen Wicklung nicht ausgefüllte, dem Aufzeichnungsmedium zugewandte Restraum des Luftspaltes muß mit einer sogenannten isolierenden Spaltschicht gefüllt sein. Diese Spaltschicht soll aus möglichst hartem Material wie z. B. Al$_2$O$_3$ bestehen, um Einkerbungen oder Auswaschungen während der Kopfherstellung zu vermeiden. Derartige Unebenheiten können nämlich zum Absturz des über dem Aufzeichnungsmedium mit äußerst geringem Abstand geführten Magnetkopfes durch sich einlagernde Schmutzpartikel führen. Es hat sich jedoch gezeigt, daß die Herstellung dieser zwischen dem Haupt- und dem Hilfspol liegenden Spaltschicht außerordentlich schwierig durchzuführen ist.

Auf Grund der erwähnten Schwierigkeiten beim Lesen mit dem bekannten kombinierten Schreib- und Lese-Kopf kann man die Funktion des Schreibens und Lesens auch mit getrennten Köpfen ausüben, um so diese Köpfe an die jeweilige Funktion optimal anpassen zu können (vgl. z. B. "IEEE Trans. Magn.", vol. MAG-16, no. 5, Sept. 1980, Seiten 967 bis 972). Für das Lesen lassen sich bekannte Ringköpfe verwenden, während das Schreiben mit speziellen Köpfen durchzuführen ist. Ein hierfür geeigneter Schreibkopf weist z. B. auf seiner der Speicherschicht des Aufzeichnungsmediums zugewandten Seite einen auch als Einzel-Pol-Kopf bezeichneten Hauptpol mit longitudinaler Ausdehnung von z. B. 3 µm auf, dem auf der Rückseite des Aufzeichningsmediums ein wesentlich ausgedehnterer Hilfspol gegenüberliegt. Der zweite, nur zum Lesen benötigte Kopf ist ein bekannter Ringkopf und hat eine Spaltweite von z. B. 0,2 µm (vgl. "IEEE Trans.Magn.", vol. MAG-17, no. 6, Nov. 1981, Seiten 2538 bis 2540). Entsprechende Einrichtungen zum Lesen und Schreiben mit an die jeweilige Funktion angepaßten besonderen Köpfen sind jedoch konstruktiv verhältnismäßig aufwendig.

Aufgabe der vorliegenden Erfindung ist es deshalb, den eingangs genannten Schreib-/Lese-Magnetkopf dahingehend zu verbessern, daß zum einen die erwähnten Probleme bei derartigen kombinierten Köpfen hinsichtlich ihres mechanischen Aufbaues verringert sind und zum anderen eine schaltbare Schreib- und Lesefunktion mit jeweils hohem Wirkungsgrad gewährleistet ist.

Diese Aufgabe wird erfindungsgemäß dadurch gelöst, daß der Abstand zwischen den dem Aufzeichnungsmedium zugewandten Endstücken der Polschenkel unter 1 µm liegt, daß die Endstücke der Polschenkel etwa gleich große Querschnitte haben, daß einer der beiden Polschenkel einen im Querschnitt reduzierten Bereich aufweist, daß jedem Polschenkel eine eigene Spulenwicklung zugeordnet ist und daß für die Schreibfunktion mittels der Spulenwicklung, welche dem Polschenkel mit dem im Querschnitt reduzierten Bereich zugeordnet ist, in diesem im Querschnitt reduzierten Bereich eine konstante Magnetfeldstärke hervorgerufen ist, die hinreichend größer als die Anisotropiefeldstärke des Materials dieses Bereiches ist, so daß dieser Bereich trotz Erregung auch der anderen Spulenwicklung stets in die magnetische Sättigung getrieben ist.

Die mit dieser Ausgestaltung des Magnetkopfes verbundenen Vorteile sind insbesondere darin zu sehen, daß der für die Schreibfunktion in die Sättigung getriebene Bereich des einen Polschenkels wie eine Sperre für den magnetischen Fluß in diesem Schenkel wirkt, so daß dieser Polschenkel an der Schreibfunktion praktisch nicht teilnimmt. Mit dem anderen Polschenkel schreibt also der Magnetkopf quasi als Einzel-Polkopf die Informationen in das Aufzeichnungsmedium. Da Flußänderungen beim Lesen erheblich kleiner sind als beim Schreiben, besteht keine Gefahr, daß der Polschenkel mit dem im Querschnitt reduzierten Bereich an dieser Stelle magnetisch gesättigt wird. Der Magnetkopf kann somit für die Lesefunktion in bekannter Weise als Ringkopf betrieben werden. Aus diesem Grunde kann auch der Abstand zwischen den Polschenkelenden vorteilhaft sehr klein gehalten werden, so daß der Kopf entsprechend gute Lese-Eigenschaften aufweist. Außerdem ist die Gefahr von Auswaschungen des zwischen diesen Enden ausgebildeten Spaltes zumindest weitgehend ausgeschlossen.

Aus "IBM Technical Disclosure Bulletin", Vol. 20, No. 8 (Jan. 1978), Seiten 3311 und 3312 ist zwar ebenfalls ein Schreib-/Lese-Magnetkopf für ein vertikal zu magnetisierendes Aufzeichnungsmedium zu entnehmen, bei dem Teile seines den magnetischen Fluß führenden Leitkörpers während der Schreibfunktion in die magnetische Sättigung getrieben sind, indem diese Teile im Querschnitt verminderte Bereiche aufweisen. Der bekannte Magnetkopf umfaßt jedoch drei Magnetschenkel, wobei die dem Aufzeichnungsmedium zugewandten Endstücke zweier Schenkel nicht vertikal, sondern horizontal angeordnet sind. D. h., bei der Schreibfunktion ist die Wirkung dieser beiden Schenkel auf eine entsprechend große Fläche ihrer dem Aufzeichnungsmedium zugewandten Breitseiten verteilt, so daß die von ihnen erzeugte Feldstärke von vornherein entsprechend gering ist. Diese Breitseiten des bekannten Magnetkopfes stellen deshalb praktisch jeweils einen Hilfspol dar, wie er auch bei dem Magnetkopf gemäß der eingangs genannten DE-A-2 924 013 vorgesehen ist. Derartige breite Hilfspole nehmen jedoch bei dem Prinzip einer vertikalen Magnetisierung an der Lesefunktion praktisch nicht teil. D. h., der bekannte Magnetkopf übt die Lesefunktion praktisch nur mit einem einzigen vertikalen Polschenkel aus. Das so zu erhaltende Lesesignal ist dementsprechend klein.

Auch aus der EP-A-0 033 236 geht ein Magnetkopf hervor, der einen Haupt- und einen Hilfspol aufweist. Dieser Magnetkopf enthält an seinem den Hilfspol bildenden Magnetschenkel einen besonderen, den Luftspalt verengenden Schenkelteil, der während der Schreibfunktion mittels einer besonderen Spule in die magnetische Sättigung getrieben und somit inaktiv ist. Der konstruktive Aufwand zur Herstellung dieses Schenkelteiles ist dementsprechend groß.

Eine weitere Lösung der genannten Aufgabe besteht Erfindungsgemäß darin, daß der Abstand zwischen den dem Aufzeichnungsmedium zugewandten Endstücken der Polschenkel unter 1 µm liegt, daß die Endstücke der Polschenkel etwa gleich große Querschnitte haben, daß einer der beiden Polschenkel einen Bereich aus einem magnetisierbaren Material mit einer vorbestimmten Curie-Temperatur aufweist und daß Mittel vorgesehen sind, um diesen Bereich während der Schreibfunktion über die Curie-Temperatur zu erhitzen. Auf diese Weise läßt sich vorteilhaft ein Magnetfeld mit einer sehr ausgeprägten vertikalen Komponente, die zum Schreiben der Informationen in das Aufzeichnungsmedium dient, auf den anderen Polschenkel konzentrieren.

Vorteilhafte Ausgestaltungen der Magnetköpfe nach der Erfindung gehen aus den Unteransprüchen hervor.

Zur weiteren Erläuterung der Erfindung wird auf die schematische Zeichnung verwiesen, in deren Fig. 1 ein Magnetkopf veranschaulicht ist. In Fig. 2 ist ein Diagramm mit einer Magnetisierungskurve für diesen Magnetkopf wiedergegeben. In den Figuren 3 und 4 ist jeweils eine weitere Ausführungsform eines erfindungsgemäßen Magnetkopfes dargestellt.

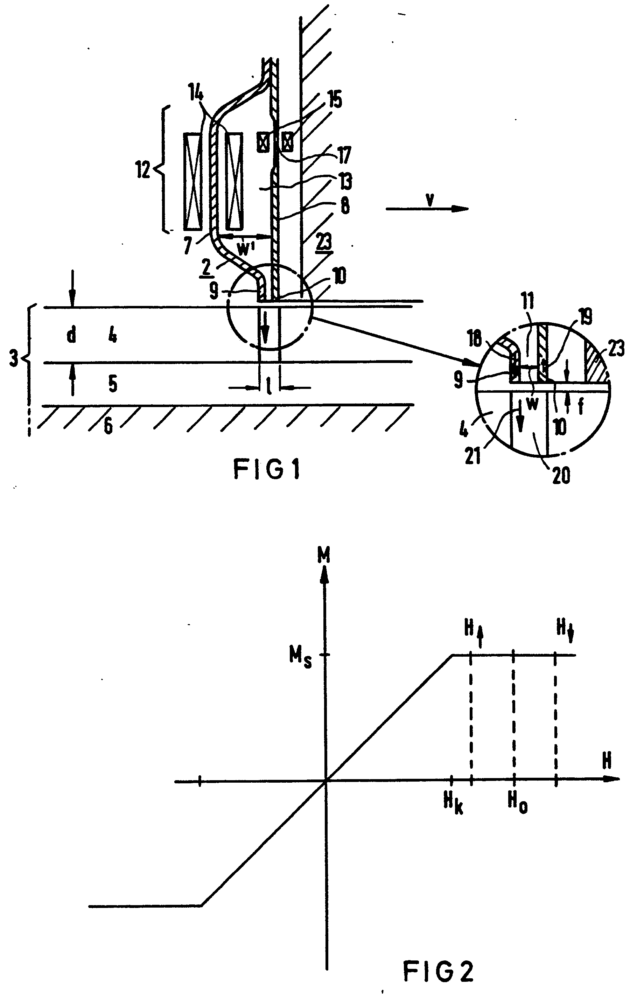

Bei dem in Fig. 1 als Längsschnitt gezeigten Schreib-/Lese-Magnetkopf nach der Erfindung wird von einem bekannten Kopf ausgegangen, wie er z. B. aus der eingangs genannten DE-OS-2 924 013 zu entnehmen ist. Der in der Figur allgemein mit 2 bezeichnete Kopf, der während seiner Schreibfunktion gemäß dem Prinzip der senkrechten (vertikalen) Magnetisierung gezeigt ist, befindet sich an der Stirn- oder Rückseite eines gebräuchlichen, als Flugkörper bezeichneten Bauteiles, das in der Figur nicht näher ausgeführt ist. Er ist relativ zu einem an sich bekannten Aufzeichnungsmedium 3 in geringer Flughöhe f von beispielsweise 0,2 µm über diesem Medium zu führen. z. B. wird das Aufzeichnungsmedium unter dem Magnetkopf hinweggeführt. Die relative Bewegungsrichtung des Magnetkopfes 2 bezüglich des Aufzeichnungsmediums 3 ist durch eine mit v bezeichnete gepfeilte Linie angedeutet.

Das Aufzeichnungsmedium 3, z. B. eine Magnetspeicherplatte, weist eine Speicherschicht 4 insbesondere aus einer CoCr-Legierung auf, welche eine vorbestimmte Dicke d hat. Diese Schicht kann gegebenenfalls auf ihrer dem Magnetkopf 2 abgewandten Seite mit einer weichmagnetischen Schicht 5, z. B. aus einer speziellen NiFe-Legierung, verbunden sein. Die Speicherschicht 4 und gegebenenfalls die Schicht 5 sind auf der oberen Flachseite eines Trägerkörpers 6 des Aufzeichnungsmediums 1 abgeschieden.

Der Magnetkopf 2 weist zwei Polschenkel 7 und 8 auf, die weitgehend und insbesondere an ihren dem Aufzeichnungsmedium 3 zugewandten Enden 9 bzw. 10 zumindest annähernd senkrecht zur Oberfläche des Aufzeichnungsmediums 3 ausgerichtet sind. Zwischen diesen Polschenkelenden ist ein Luftspalt 11 mit einer vorteilhaft geringen longitudinalen, d. h. in Bewegungsrichtung weisenden Weite w unter 1 µm, insbesondere unter 0,3 µm ausgebildet. In einer mittleren Zone 12 ist der Abstand zwischen den beiden Polschenkeln 7 und 8 gegenüber der Spaltweite w erweitert, indem z. B. der hinsichtlich der Bewegungsrichtung rückwärtige Polschenkel 7 in dieser Zone auf einen größeren Abstand w' bezüglich des vorderen, gerade ausgebildeten Polschenkels 8 führt. Wegen des so ausgebildeten Zwischenraumes 13 zwischen den Schenkeln 7 und 8 ist es ermöglicht, daß in dieser Zone 12 zumindest Teile jedes Polschenkels von einer eigenen Spulenwicklung 14 bzw. 15 umgeben sind. Außerhalb dieser Zone auf der dem Aufzeichnungsmedium 3 abgewandten Seite sind die Polschenkel in bekannter Weise wieder zusammengeführt.

Gemäß der Erfindung weist einer der beiden Polschenkel, z. B. der Polschenkel 8, einen verengten Bereich 17 auf, dessen Querschnitt wesentlich kleiner, insbesondere mindestens dreimal kleiner als der Querschnitt der übrigen Teile dieses Polschenkels ist. Diesem Bereich 17 ist die Spulenwicklung 15 zugeordnet. Mit dieser Wicklung läßt sich ein ausreichend großes, konstantes magnetisches Feld erzeugen, um das Material des Polschenkels 8 in diesem Bereich in die magnetische Sättigung zu treiben (vgl. Fig. 2). Dieser Bereich 17 wirkt dann wie eine magnetische Sperre für den magnetischen Fluß, welcher von der dem anderen Polschenkel 7 zugeordneten Spulenwicklung 14 erzeugt wird und welcher durch eine gepfeilte Linie 18 angedeutet ist. An dem Ende 10 des Polschenkels 8 mit dem verengten Bereich 17 ist somit höchstens ein minimaler, durch eine gepfeilte Linie 19 angedeuteter Magnetfluß vorhanden, so daß praktisch nur mit dem magnetischen Fluß 18 des anderen Polschenkels 7 die Schreibfunktion ausgeübt wird. Die sich so ergebende Magnetisierung eines Abschnittes 20 in der Speicherschicht 4 ist durch eine gepfeilte Linie 21 veranschaulicht. In der Figur ist zwar die longitudinale Ausdehnung 1 dieses Speicherabschnittes 20 in der Größenordnung des entsprechenden Abstandes zwischen den äußeren Kanten der Polschenkelenden 9 und 10 gezeigt. Im allgemeinen ist jedoch diese Ausdehnung 1 kleiner, so daß mit dem erfindungsgemäßen Magnetkopf 2 praktisch eine höhere Informationsdichte in dem Aufzeichnungsmedium 3 erreicht wird als der geometrischen Ausdehnung der beiden Polschenkel entsprechen würde (vgl. z. B. auch "IEEE Trans. Magn.", vol. MAG-17, no. 6, Nov. 198, Seiten 2538 bis 2540).

Für die Lesefunktion können beide Spulenwicklungen 14 und 15 in Serie geschaltet werden, um so die hervorgerufene Signalspannung zu erhöhen. Eine unerwünschte Sättigung in dem verengten Bereich 17 ist hierbei nicht zu befürchten.

Bei der Herstellung des Magnetkopfes 2 in Dünnschicht-Technik wird im allgemeinen ein Substrat 23 verwendet, das z. B. aus TiC und $Al_2O_3$ besteht. Falls erforderlich, kann das Substrat 23 mit einer hinreichend dicken Isolationsschicht, z. B. aus $Al_2O_3$ versehen werden. Zum Aufbau der Polschenkel 7 und 8 werden dünne Magnetschichten aus speziellen NiFe-Legierungen wie Permalloy (Ni/Fe-81/19) oder aus FeB durch Sputtern, Aufdampfen oder galvanische Abscheidung aufgebracht und durch eine nichtmagnetische Zwischenlage aus z. B. $SiO_2$ oder $Al_2O_3$ voneinander getrennt. Die Magnetisierung dieser Magnetschichten liegt dabei in der Schichtebene. Durch den Herstellungsprozeß bedingt weisen die Magnetschichten eine uniaxiale Anisotropie auf, d. h. daß jede Magnetschicht zwei um 90° gedrehte Anisotropieachsen aufweist, die als leichte oder schwere Richtung bezeichnet werden. Die Magnetisierung liegt bevorzugt parallel oder antiparallel zur leichten Richtung. Die leichte Richtung der Magnetschichten kann z. B. beim Aufbringen der jeweiligen Schicht durch ein angelegtes Magnetfeld induziert werden.

Die aufgewachsenen, unterschiedlichen Schichten verden durch an sich bekannte Techniken wie Fotolithografie, Plasma-, Ionenstrahl- oder naßchemisches Ätzen strukturiert und damit die beiden Polschenkel 7 und 8 des Magnetkopfes 2 hergestellt. Die leichte Richtung der Magnetisierung der Magnetschichten liegt hierbei im allgemeinen immer senkrecht zur Richtung des magnetischen Flusses in den Polschenkeln, d. h. im Bereich der Enden 9 und 10 im wesentlichen parallel zur Oberfläche des Aufzeichnungsmediums 1. Nach Fertigstellung des einen Polschenkels 8 wird eine Isolationsschicht, z. B. $SiO_2$ aufgebracht und werden anschließend die zum Ein- und/oder Auslesen der Daten in der Magnetspeicherschicht 4 des Aufzeichnungsmediums 1 erforderlichen Spulenwicklungen 14 und 15 hergestellt bzw. strukturiert. Diese Wicklungen bestehen z. B. aus Cu, Au oder Al. Da unebene Magnetschichten eine Verschlechterung ihrer magnetischen Eigenschaften bewirken, können gegebenenfalls die Spulenwicklungen 14 und 15 in bekannter Weise mittels Polyimid-Lacks eingeebnet verden. Daran anschließend erfolgt das Aufbringen und Strukturieren des zweiten Polschenkels 7. Schließlich wird zum Schutz des Dünnschicht-Magnetkopfes 2 noch eine verhältnismäßig dicke Protektionsschicht, z. B. aus $Al_2O_3$ aufgebracht.

Mit dem in Fig. 1 gezeigten Magnetkopf 2 soll gerade eine Schreibfunktion ausgeübt werden. Hierzu sind erfindungsgemäß in dem Bereich 17 mit vermindertem Querschnitt Magnetisierungsverhältnisse zugrundezulegen, wie sie aus dem Diagramm der Fig. 2 entnehmbar sind. In dieser Figur ist als Kurve die Magnetisierung M in schwerer Richtung in Abhängigkeit von der auftretenden Magnetfeldstärke H wiedergegeben. Hierbei sind folgende Bezeichnungsweisen gewählt: $M_s$ ist die Sättigungsmagnetisierung, $H_0$ ist die Feldstärke des konstanten magnetischen Feldes, das mit der Spule 15 erzeugt wird, und $H_k$ ist die Anistropiefeldstärke des Materials in dem querschnittsverminderten Bereich 17. $H\uparrow$ und $H\downarrow$ sind die Feldstärken, die sich auf Grund der Erregung der Spulenwicklung 14 in diesem querschnittsverminderten Bereich 17 je nach Polaritätsrichtung ergeben.

Aus der dargestellten Kurve ist ersichtlich, daß das konstante Feld $H_0$ hinreichend groß sein muß, um in diesem Bereich 17 die Sättigungsmagnetisierung $M_s$ zu erreichen. Außerdem ist das Feld $H_0$ hierfür so groß zu wählen, daß die beim Schreiben an dem Bereich 17 auftretenden Magnetfelder $H_0$, $H\uparrow$ und $H\downarrow$ größer als die Anisotropiefeldstärke $H_k$ sind, da sowohl Plus($\uparrow$)- als Minus($\downarrow$)-Richtungen geschrieben verden und $H\uparrow$ und $H\downarrow$ jeweils das Resultat des Feldes $H_0$ und der Einwirkung des im Schenkel 7 hervorgerufenen Feldes auf Schenkel 8 (17) ist.

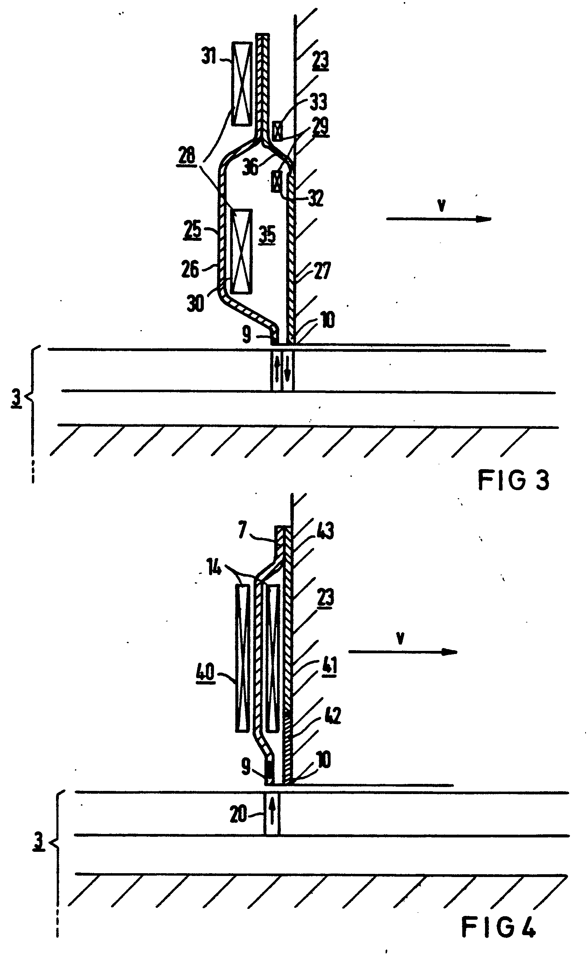

Eine weitere Ausführungsform eines Magnetkopfes nach der Erfindung geht aus Fig. 3 in Fig. 1 entsprechender Darstellung während einer Lesefunktion hervor. Mit Fig. 1 übereinstimmende Teile sind mit den gleichen Bezugszeichen versehen. Dieser mit 25 bezeichnete Magnetkopf unterscheidet sich von dem Magnetkopf 2 gemäß Fig. 1 im wesentlichen nur durch einen vereinfachten Schichtaufbau, indem eine größere Anzahl von übereinanderliegenden Spulenwicklungen vermieden wird. Seine longitudinale Ausdehnung in Flugrichtung ist dementsprechend begrenzt. Hierzu weisen seine den Polschenkeln 26 und 27 zugeordneten Spulenwicklungen 28 und 29 jeweils zwei Wicklungsteile 30, 31 bzw. 32, 33 auf, welche gemäß dem in der Figur dargestellten Längsschnitt senkrecht bezüglich der Oberfläche des Aufzeichnungsmediums 3 übereinander angeordnet sind. Dabei ist jeweils nur eine Teilwicklung 30 bzw. 32 der Spulenwicklungen 28 und 29 in dem zwischen den Polschenkeln 26 und 27 ausgebildetem Zwischenraum 35 untergebracht, während die anderen Teilwicklungen auf der oberen, dem Aufzeichnungsmedium 3 abgewandten Seite, wo die beiden Polschenkel 26 und 27 wieder aneinandergefügt sind, an diesen Polschenkeln angeordnet sind. Die Teilwicklungen 32 und 33 der Spulenwicklung 24 sind dabei dem querschnittsverminderten Teil 36 des Polschenkels 27 zugeordnet.

Bei den Ausführungsformen der Magnetköpfe 2 und 25 gemäß den Figuren 1 und 3 wurde davon ausgegangen, daß das Schreiben eines der beiden Polschenkel dadurch unterbunden wird, daß in diesem Schenkel ein querschnittsverminderter Bereich vorgesehen ist, der mit Hilfe einer besonderen Spulenwicklung in die Sättigungsmagnetisierung getrieben wird. Eine weitere Möglichkeit zur Unterbindung eines unerwünschten Schreibens eines Polschenkels ist aus Fig. 4 ersichtlich. Der in der Figur als Längsschnitt dargestellte und allgemein mit 40 bezeichnete Magnetkopf entspricht in wesentlichen Teilen dem Magnetkopf 2 nach Fig. 1. Entsprechende Teile sind deshalb mit den gleichen Bezugszeichen versehen. Um ein Schreiben des in Bewegungsrichtung gesehen vorderen Polschenkels 41 mit seinem Ende 10 zu verhindern, weist dieser Polschenkel vorzugsweise an seinem dem Aufzeichnungsmedium 1 zugewandten Ende 10 erfindungsgemäß einen besonderen Bereich 42 auf, der aus einem magnetisierbaren Material besteht, das eine vorbestimmte Curie-Temperatur $T_C$ aufweist. Entsprechende Materialien sind z. B. spezielle FeNi-Legierungen, deren Curie-Temperatur $T_C$ verhältnismäßig niedrig liegt. So hat beispielsweise die unter dem Handelsnamen THERMOFLUX (eingetragenes Warenzeichen der Firma Vacuumschmelze GmbH, Hanau) bekannte Legierung einen Ni-Anteil von etewa 30 %, wobei durch geringe Variation der Zusammensetzung eine Curie-Temperatur $T_C$ zwischen 30 und 120° C einstellbar ist (vgl. z. B. "Weichmagnetische Werkstoffe", Herausgeber: Vacuumschmelze GmbH, Verlag: Siemens AG, Berlin und München, 3 Auflage, 1977, insbesondere Seiten 128 und 290 bis 292). Beim Schreiben wird dann der aus einem solchen Material bestehende Bereich 42 so stark erhitzt, daß seine Temperatur diese Curie-Temperatur $T_C$ überschreitet. Hierdurch wird der Bereich 42 paramagnetisch, so daß er praktisch wie ein Luftspalt einen entsprechend hohen Widerstand für den magnetischen Fluß in dem Polschenkel 41 darstellt. Auf diese Weise schreibt nur der in Bewegungsrichtung gesehen hintere Polschenkel 7, der mit der Spulenwicklung 14 entsprechend erregt wird. Die Ausbildung dieser Spulenwicklung kann auch entsprechend der Spulenwicklung 28 gemäß Fig. 3 vorgenommen sein.

Die Erhitzung des besonderen Bereiches 42 über die Curie-Temperatur $T_C$ kann z. B. durch den Schreibstrom der Spulenwicklung 14 erfolgen. Selbstverständlich kann der Bereich 42 auch durch zusätzliche, in der Figur nicht näher dargestellte Einrichtung zum Aufheizen auf die gewünschte Temperatur gebracht werden.

Bedingt durch die ebenfalls anzuwendende Dünnschicht-Technologie ist die Wärmekapazität des Magnetkopfes 40 so klein, daß die Aufheizung des Kopfes und insbesondere des Bereiches 42 seines Polschenkels 41 hinreichend schnell erfolgt. Eine schnelle Abkühlung beim Lesen wird vorteilhaft durch ein Substrat 23 gefördert, das aus einem gut wärmeleitenden Material besteht. Beim Abkühlen wird sich die Anisotropierichtung der magnetischen Schichten des Bereiches 42 durch die Streufelder der magnetischen Schichten des Polschenkels 7 und durch Austauschkopplung mit den magnetischen Schichten des übrigen Teiles 43 des Polschenkels 41 bevorzugt parallel zu den magnetischen Schichten des Bereiches 42 einstellen, so daß beim Lesen die guten Eigenschaften eines longitudinalen Magnetkopfes erreicht werden.

Um gegebenenfalls festzustellen, ob der Magnetkopf 40 schreibbereit ist, d. h. ob die Curie-Temperatur $T_C$ überschritten ist, oder ob er lesebereit ist, genügt es, vor dem Schreiben oder Lesen eine Messung der Induktivität der Spulenwicklung 14 durchzuführen.

## Patentansprüche

1. Schreib-/Lese-Magnetkopf (2, 25) für ein Aufzeichnungsmedium (3), das mit mindestens einer magnetisierbaren Speicherschicht (4) versehen, ist, welche ein magnetisch anisotropes Material enthält, dessen Achse leichter Magnetisierung im wesentlichen senkrecht zur Oberfläche des Aufzeichnungsmediums (3) ausgerichtet ist und in das längs einer Spur Informationen durch senkrechte Magnetisierung der Speicherschicht (4) einzuschreiben sind, welcher Magnetkopf (2, 25)

einen den magnetischen Fluß führenden Leitkörper mit zwei Polschenkeln (7, 8, 26, 27) aufweist, die in Bewegungsrichtung des Kopfes hintereinander angeordnet sind und deren dem Aufzeichnungsmedium (3) zugewandten, zumindest weitgehend senkrecht bezuglich der Oberfläche des Aufzeichnungsmediums ausgerichteten Endstücke (9, 10) untereinander einen vorbestimmten Abstand (w) haben, und

mindestens eine Spulenwicklung (14, 15, 28, 29) enthält, wobei für die Lesefunktion die Flußführungsrichtungen in den beiden Polschenkelendstücken (9, 10) antiparallel verlaufen,

dadurch gekennzeichnet,

daß der Abstand (w) zwischen den dem Aufzeichnungsmedium (3) zugewandten Endstücken (9, 10) der Polschenkel (7, 8, 26, 27) unter 1 µm liegt, daß die Endstücke (9, 10) der Polschenkel (7, 8, 26, 27) etwa gleich große Querschnitte haben, daß einer der beiden Polschenkel (8, 27) einen im Querschnitt reduzierten Bereich (17, 36) aufweist,

daß jedem Polschenkel (7, 8, 26, 27) eine eigene Spulenwicklung (14, 15; 28, 29) zugeordnet ist und

daß für die Schreibfunktion mittels der Spulenwicklung (15; 29) , welche dem (8, 27) mit dem im Querschnitt reduzierten Bereich (17, 36) zugeordnet ist, in diesem im Querschnitt reduzierten Bereich (17, 36) eine konstante Magnetfeldstärke ($H_o$) hervorgerufen ist, die hinreichend größer als die Anisotropiefeldstärke ($H_k$) des Material dieses Bereiches (17, 36) ist, so daß dieser Bereich (17, 36) trotz Erregung auch der anderen Spulenwicklung (14, 28) stets in die magnetische Sättigung getrieben ist.

2. Schreib-/Lese-Magnetkopf (40) für ein Aufzeichnungsmedium (3), das mit mindestens einer magnetisierbaren Speicherschicht (4) versehen ist, welche ein magnetisch anisotropes Material enthält, dessen Achse leichter Magnetisierung im wesentlichen senkrecht zur Oberfläche des Aufzeichnungsmediums (3) ausgerichtet ist und in das längs einer Spur Informationen durch senkrechte Magnetisierung der Speicherschicht (4) einzuschreiben sind, welcher Magnetkopf (40)

einen den magnetischen Fluß führenden Leitkörper mit zwei Polschenkeln (7, 41) aufweist, die in Bewegungsrichtung des Kopfes hintereinander angeordnet sind und deren dem Aufzeichnungsmedium (3) zugewandten, zumindest weitgehend senkrecht bezüglich der Oberfläche des Aufzeichnungsmediums ausgerichteten Endstücke (9, 10) untereinander einen vorbestimmten Abstand (w) haben, und

mindestens eine Spulenwicklung (14) enthält, wobei für die Lesefunktion die Flußführungsrichtungen in den beiden Polschenkelendstücken (9, 10) antiparallel verlaufen,

dadurch gekennzeichnet,

daß der Abstand (w) zwischen den dem Aufzeichnungsmedium (3) zugewandten Endstücken (9, 10) der Polschenkel (7, 41) unter 1 µm liegt,

daß die Endstücke (9, 10) der Polschenkel (7, 41) etwa gleichgroße Querschnitte haben, daß einer der beiden Polschenkel (41) einen Bereich (42) aus einem magnetisierbaren Material mit einer vorbestimmten Curie-Temperatur aufweist und

daß Mittel vorgesehen sind, um diesen Bereich (42) während der Schreibfunktion über die Curie-Temperatur zu erhitzen.

3. Magnetkopf nach Anspruch 2, dadurch gekennzeichnet, daß zur Erhitzung des Bereiches (42) mit der vorbestimmten Curie-Temperatur der Schreibstrom der Spulenwicklungen (14) vorgesehen ist.

4. Magnetkopf nach Anspruch 2, dadurch gekennzeichnet, daß besondere Einrichtungen zum Erhitzen des Bereiches (42) mit der vorbestimmten Curie-Temepratur vorgesehen sind.

5. Magnetkopf nach einem der Ansprüche 1 bis 4, dadurch gekennzeichnet, daß zumindest teilweise seine den Magnetfluß führenden Teile (Polschenkel 7, 8, 26, 27, 41) aus weichmagnetischem Material bestehen.

6. Magnetkopf nach einem der Ansprüche 1 bis 5, dadurch gekennzeichnet, daß seine den Magnetfluß führenden Teile (Polschenkel 7, 8, 26, 27, 41) aus einem Material bestehen, dessen leichte Magnetisierung zumindest weitgehend senkrecht zur Führungsrichtung des Magnetflusses gerichtet ist.

7. Magnetkopf nach einem der Ansprüche 1 bis 6, dadurch gekennzeichnet, daß zwischen den Polschenkeln (7, 8, 26, 27, 41) ein vom Abstand (w) zwischen ihren dem Aufzeichnungsmedium (3) zugewandten Endstücken (9, 10) auf einen größeren Abstand (w') erweiterter Zwischenraum (13, 35) ausgebildet ist, in dem zumindest teilweise die Spulenwicklungen (14, 15, 28, 29) angeordnet sind.

8. Magnetkopf nach Anspruch 7, dadurch gekennzeichnet, daß jede Spulenwicklung (28, 29) zwei Teilwicklungen (30, 31 bzw. 32, 33) umfaßt, wobei jeweils eine der Teilwicklungen (30, 32) in dem erweiterten Zwischenraum (35) und die anderen Teilwicklungen (31, 33) in einem Bereich angeordnet sind, in dem die Polschenkel (26, 27) auf ihrer dem Aufzeichnungsmedium (3) abgewandten Seite wieder zusammengeführt sind.

9. Magnetkopf nach einem der Ansprüche 1 bis 8, dadurch gekennzeichnet, daß zumindest teilweise seine den Magnetfluß führenden Teile (Polschenkel 7, 8, 26, 27, 41) als Dünnschicht-Strukturen auf einem ebenen Substratkörper (23) aufgebracht sind.

10. Magnetkopf nach Anspruch 9, dadurch gekennzeichnet, daß die Spulenwicklungen (14, 15, 28, 29) als Dünnschicht-Strukturen auf dem Substratkörper (23) bzw. auf einem der Polschenkel (8, 27, 41) aufgebracht sind.

**Claims**

1. A read/write magnetic head (2, 25) for a recording medium (3) which is provided with at least one magnetisable storage layer which comprises a magnetically anisotropic material whose axis of easy magnetisation is aligned substantially perpendicular to the surface of the recording medium (3) and into which information is to be written along a track by vertically magnetising the storage layer (4), said magnetic head (2, 25) having a conductive body that conducts the magnetic flux and has two pole limbs (7, 8, 26, 27) which are arranged one behind the other in the direction of movement of the head and of which the end parts (9, 10) facing the recording medium (3) are aligned, at least to a large extent, at right angles to the surface of the recording medium and are a predetermined distance (w) from one another, and containing at least one coil winding (14, 15, 28, 29), the directions in which the flux is conducted running antiparallel in the two pole limb end parts (9, 10) for the reading function, characterised in that the distance (w) between the end parts (9, 10) of the pole limbs (7, 8, 26, 27) facing the recording medium (3) is less than 1 μm, in that the end parts (9, 10) of the pole limbs (7, 8, 26, 27) have about the same cross-sectional size, in that one of the two pole limbs (8, 27) has a region (17, 36) of reduced cross-section, in that an individual coil winding (14, 15; 28, 29) is associated with each pole limb (7, 8; 26, 27), and in that for the writing function, by means of the coil winding (15; 29) which is associated with the pole limb (8, 27) with the region (17, 36) of reduced cross-section, a constant magnetic field strength ($H_o$) is created in this region (17, 36) of reduced cross-section which is sufficiently larger than the anisotropy field strength ($H_k$) of the material of this region (17, 36) for this region (17, 36) always to be driven to magnetic saturation despite excitation of the other coil winding (14, 28).

2. A read/write magnetic head (40) for a recording medium (3) which is provided with at least one magnetisable storage layer (4) which comprises a magnetically anisotropic material whose axis of easy magnetisation is aligned substantially perpendicular to the surface of the recording medium (3) and into which information is to be written along a track by vertically magnetising the storage layer (4), said magnetic head (40) having a conductive body that conducts the magnetic flux and has two pole limbs (7, 41) which are arranged one behind the other in the direction of movement of the head, and of which the end parts (9, 10) facing the recording medium (3) are aligned, at least to a large extent, at right angles to the surface of the recording medium and are a predetermined distance (w) from one another, and containing at least one coil winding (14), the directions in which the flux is conducted running antiparallel in the two pole limb end parts (9, 10) for the reading function, characterised in that the distance (w) between the end parts (9, 10) of the pole limbs (7, 41) facing the recording medium (3) is less than 1 μm, in that the end parts (9, 10) of the pole limbs (7, 41) have about the same cross-sectional size, in that one of the two pole limbs (41) has a region (42) consisting of a magnetisable material having a predetermined Curie temperature, and in that means are provided to heat this region (42) above the Curie temperature during the writing function.

3. A magnetic head according to claim 2, characterised in that the writing current of the coil winding (14) serves to heat the region (42) having the predetermined curie temperature.

4. A magnetic head according to claim 2, characterised in that special means are provided to heat the region (42) having the predetermined Curie temperature.

5. A magnetic head according to any one of claims 1 to 4, characterised in that its parts (pole limbs 7, 8, 26, 27, 41) conducting the magnetic flux consist at least in part of soft magnetic material.

6. A magnetic head according to any one of claims 1 to 5, characterised in that its parts (pole limbs 7, 8, 26, 27, 41) conducting the magnetic flux consist of a material whose direction of easy magnetisation is at least to a large extent perpendicular to the conducting direction of the magnetic flux.

7. A magnetic head according to any one of claims 1 to 6, characterised in that an enlarged intermediate space (13, 35), in which at least part of the coil windings (14, 15, 28, 29) is arranged, is formed between the pole limbs (7, 8, 26, 27, 41) by increasing the distance (w) between their end parts (9, 10) facing the recording medium (3) to a greater distance (w').

8. A magnetic head according to claim 7, characterised in that each coil winding (28, 29) includes two part windings (30, 31; 32, 33 respectively), one of these part windings (30, 32) being arranged in the enlarged intermediate space (35), and the other part winding (31, 33) is arranged in a region in which the pole limbs (26, 27) are joined together again on their side facing away from the recording medium (3).

9. A magnetic head according to any one of claims 1 to 8, characterised in that its parts (pole limbs 7, 8, 26, 27, 41) conducting the magnetic flux are at least partially applied on a flat substrate body (23) as thin layer structures.

10. A magnetic head according to claim 9, characterised in that the coil windings (14, 15, 28, 29) are applied on the substrate body (23) and/or on one of the pole limbs (8, 27, 41) as thin layer structures.

## Revendications

1. Tête magnétique d'écriture/lecture (2, 25) pour un support d'enregistrement (3) pourvu d'au moins une couche mémoire aimantable (4) contenant un matériau magnétiquement anisotrope dont la direction préférentielle de magnétisation est essentiellement orientée perpendiculairement à la surface du support d'enregistrement (3) et dans lequel des informations sont à inscrire, le long d'une piste, par aimantation perpendiculaire de la couche mémoire (4), tête magnétique (2, 25) présentant un corps conducteur, guidant le flux magnétique, avec deux branches polaires (7, 8, 26, 27) qui sont disposées l'une derrière l'autre dans la direction de déplacement de la tête et dont les portions terminales (9, 10), dirigées vers le support d'enregistrement (3) et orientées au moins à peu près perpendiculairement à la surface du support d'enregistrement, présentent entre elles une distance (w) prédéterminée, la tête magnétique comportant, en outre, au moins un bobinage (14, 15, 28, 29) et les directions de guidage du flux étant antiparallèles dans les deux portions terminales (9, 10) des branches polaires pour la fonction de lecture,
caractérisée en ce
que la distance (w) entre les portions terminales (9, 10) des branches polaires (7, 8, 26, 27), portions qui sont dirigées vers le support d'enregistrement (3), est inférieure à 1 μm,

que les portions terminales (9, 10) des branches polaires (7, 8, 26, 27) possèdent des sections droites à peu près d'égale grandeur, que l'une des deux branches polaires (8, 27) présente une zone (17, 36) de section réduite, qu'un bobinage individuel (14, 15; 28, 29) est coordonné à chaque branche polaire (7, 8; 26, 27) et que, pour la fonction d'écriture au moyen du bobinage (15; 29) coordonné à la branche polaire (8, 27) avec la zone (17, 36) de section réduite, une intensité de champ magnétique constante ($H_o$) est engendrée, dans cette zone (17, 36) de section réduite, qui dépasse suffisamment l'intensité de champ anisotropique ($H_k$) du matériau le cette zone (17, 36) pour que celle-ci soit toujours amenée à l'état de saturation magnétique, malgré le fait que l'autre bobinage (14, 28) soit également excité.

2. Tête magnétique d'écriture/lecture (40) pour un support d'enregistrement (3) pourvu d'au moins une couche mémoire aimantable (4) contenant un matériau magnétiquement anisotrope dont la direction préférentielle de magnétisation est essentiellement orientée perpendiculairement à la surface du support d'enregistrement (3) et dans lequel des informations sont à inscrire, le long d'une piste, par aimantation perpendiculaire de la couche mémoire (4), tête magnétique (40) présentant un corps conducteur, guidant le flux magnétique, avec deux branches polaires (7, 41) qui sont disposées l'une derrière l'autre dans la direction de déplacement de la tête et dont les portions terminales (9, 10), dirigées vers le support d'enregistrement (3) et orientées au moins à peu près perpendiculairement à la surface du support d'enregistrement, présentent entre elles une distance (w) prédéterminée, la tête magnétique comportant, en outre, au moins un bobinage (14) et les directions de guidage du flux étant antiparallèles dans les deux portions terminales (9, 10) des branches polaires pour la fonction de lecture,
caractérisée en ce
que la distance (w) entre les portions terminales (9, 10) des branches polaires (7, 41), portions qui sont dirigées vers le support d'enregistrement (3), est inférieure à 1 μm,
que les portions terminales (9, 10) des branches polaires (7, 41) possèdent des sections droites à peu près d'égale grandeur,
que l'une des deux branches polaires (41) présente une zone (42) faite d'un matériau aimantable avec un point de curie prédéterminé et que des moyens sont prévus pour chauffer cette zone (42) au-delà du point de Curie pendant la fonction d'écriture.

3. Tête magnétique selon la revendication 2, caractérisée en ce que le courant d'écriture des bobinages (14) est prévu pour chauffer la zone (42) présentant le point de Curie prédéterminé.

4. Tête magnétique selon la revendication 2, caractérisée en ce que des dispositifs particuliers sont prévus pour chauffer la zone (42) présentant le point de Curie prédéterminé.

5. Tête magnétique selon une des revendications 1 à 4, caractérisée en ce que ses parties guidant le flux magnétique (branches polaires 7, 8, 26, 27, 41) sont constituées au moins partiellement d'un matériau magnétique doux.

6. Tête magnétique selon une des revendications 1 à 5, caractérisée en ce que ses parties guidant le flux magnétique (branches polaires 7, 8, 26, 27, 41) sont constituées d'un matériau dont la direction préférentielle de magnétisation est au moins sensiblement perpendiculaire à la direction de guidage du flux magnétique.

7. Tête magnétique selon une des revendications 1 à 6, caractérisée par la formation, entre les branches polaires (7, 8, 26, 27, 41), d'un espace intermédiaire (13, 35) qui part du faible écartement (w) entre les portions terminales (9, 10) des branches dirigées vers le support d'enregistrement (3) et s'élargit de là à une distance (w') plus grande entre les branches, et dans lequel sont disposés au moins en partie les bobinages (14, 15, 28, 29).

8. Tête magnétique selon la revendication 7, caractérisée en ce que chaque bobinage (28, 29) comporte deux enroulements partiels (30, 31 respectivement 32, 33) dont l'un (30, 32) est disposé chaque fois dans l'espace intermédiaire élargi (35) et dont l'autre enroulement partiel (31, 33) est disposé dans une zone ou les branches polaires (26, 27) sont de nouveau réunies, sur leur côté éloigné du support d'enregistrement (3).

9. Tête magnétique selon une des revendications 1 à 8, caractérisée en ce que ses parties guidant le flux magnétique (branches polaires 7, 8, 26, 27, 41) sont réalisées au moins partiellement comme des structures à couches minces sur un corps plan (23) formant substrat.

10. Tête magnétique selon la revendication 9, caractérisée en ce que les bobinages (14, 15, 28, 29) sont appliqués comme des structures à couches minces sur le substrat (23) ou sur l'une des branches polaires (8, 27, 41).

FIG 1

FIG 2

FIG 3

FIG 4